# EUROPEAN PATENT SPECIFICATION

(11) **EP 4 172 016 B1**
(45) Date of publication and mention of the grant of the patent: **28.02.2024**
(21) Application number: 20753674.9
(22) Date of filing: 24.06.2020
(51) Int. Cl.: B60T 17/02

(54) **MOTOR VEHICLE VACUUM PUMP**
KRAFTFAHRZEUG-VAKUUMPUMPE
POMPE À VIDE DE VÉHICULE AUTOMOBILE

(43) Date of publication of application: 03.05.2023
(73) Proprietor: Pierburg Pump Technology GmbH, 41460 Neuss (DE)
(72) Inventor: PIOTROWSKI, Marcel, 41460 Neuss (DE); AL-HASAN, Nabil Salim, 41460 Neuss (DE); RUSS, Stanislaus, 41460 Neuss (DE); SCHULZ, Christian, 41460 Neuss (DE); GRÜNE, Tobias, 41460 Neuss (DE); STEPANOW, Michael, 41460 Neuss (DE)
(74) Representative: terpatent Patentanwälte und European Patent Attorneys ter Smitten Eberlein -Van Hoof
(86) International application number: PCT/EP2020/067666
(87) International publication number: WO 2021/259464

(56) References cited:
- WO-A1-93/11983
- WO-A1-2010/041774
- WO-A1-2014/135773
- DE-A1-102011 076 785

## Description

The present invention is directed to a motor vehicle vacuum pump, in particular to an electric rotary vane vacuum pump for providing vacuum to a motor vehicle brake booster.

Electric vacuum pumps are driven by an electric motor and are typically used in motor vehicles for providing vacuum to a brake booster of a motor vehicle braking system, in particular for providing vacuum to a vacuum chamber of the brake booster. The electric vacuum pump can be the only vacuum source for the brake booster, or can be used in combination with other vacuum sources as for example an intake system of an internal combustion engine.

The brake booster utilizes the pressure difference between its vacuum chamber pressure and the surrounding atmospheric pressure to enhance a mechanic brake force which is generated by pressing the brake pedal of the motor vehicle and which mechanically actuates the motor vehicle braking system. Providing the brake booster vacuum chamber with an adequate vacuum is therefore crucial to ensure a reliable operation of the brake booster and, as a result, to ensure a reliable and convenient operation of the motor vehicle braking system.

Motor vehicle electric vacuum pumps are typically not designed for a permanent pumping operation. Rather, these vacuum pumps are designed for a selective operation with on-times of only a few seconds. Typically, the electric motor of the vacuum pump is only switched on if a vacuum chamber negative pressure or a vacuum chamber difference pressure (relative to atmospheric pressure) drops below a critical-pressure threshold, and is instantly switched off again if the vacuum chamber negative/difference pressure reaches/exceeds a defined target-pressure threshold.

In the present context, a greater negative/difference pressure always means a lesser absolute pressure in the vacuum chamber. As a result, increasing the vacuum chamber negative/difference pressure always means decreasing the absolute vacuum chamber pressure and decreasing the vacuum chamber negative/difference pressure always means increasing the absolute vacuum chamber pressure.

WO 2014/135773 A1 discloses a method for controlling brake booster assistance vacuum, involving decreasing high threshold when quantified operation period of pump is greater than or equal to upper time limit.

DE 10 2011 076 785 A1 discloses, for example, a motor vehicle vacuum pump for providing vacuum to a brake booster vacuum chamber. The vacuum pump comprises a pumping unit with a rotatable pump rotor, and an electric motor for driving the pump rotor. The vacuum pump also comprises a pressure sensor connector for periodically receiving a difference-pressure parameter from a motor vehicle pressure sensor, wherein the difference-pressure parameter indicates the present vacuum chamber difference pressure relative to the present atmospheric pressure. The vacuum pump is also provided with a pump control unit for controlling the electric motor based on the received difference-pressure parameter. In particular, the pump control unit is configured to switch on the electric motor if the received difference-pressure parameter is below a critical-pressure threshold, and is configured to switch off the electric motor if the received difference-pressure parameter is equal to or greater than a defined target- pressure threshold.

However, if the atmospheric pressure is relatively low, e.g. if the motor vehicle is driven at relatively high geographical elevations, or if the pumping efficiency of the pumping unit is reduced caused by wear, the electric motor has to be active relatively long to reach the target difference-pressure. Depending on the absolute atmospheric pressure and the absolute pumping unit efficiency, it can occur that the pump performance of the vacuum pump is not sufficient to reach the target pressure at all, causing the electric motor to be continuously active. This excessive motor operation causes significant wear and can even cause an overheating of the electric motor which can cause severe damage or even a failure of the vacuum pump. In addition, the excessive pumping operation causes significant energy waste because the vacuum pump is permanently energized but does not effectively increase the vacuum chamber difference pressure.

It is an object of the present invention to provide an efficient and reliable motor vehicle vacuum pump.

This object is achieved with a motor vehicle vacuum pump with the features of claim 1.

The motor vehicle vacuum pump according to the present invention is provided with a pumping unit with a rotatable pump rotor. Preferably, the vacuum pump is a vane pump wherein the pump rotor comprises a rotor body which is eccentrically arranged in a substantially cylindrical pumping chamber and which comprises several radially slidable rotor vanes. During pump operation, the rotor vanes are in touching radial contact with a pumping chamber sidewall and define several rotating pumping-chamber compartments whose volume varies within one pump rotor revolution.

The motor vehicle vacuum pump according to the present invention is also provided with an electric motor for driving the pump rotor. Typically, the electric motor comprises an electromagnetic motor stator with at least one stator coil, and comprises a permanent-magnetic motor rotor which is co-rotatably connected with the pump rotor.

The motor vehicle vacuum pump according to the present invention is also provided with a pressure sensor connector for periodically receiving a difference-pressure parameter provided by a motor vehicle pressure sensor. Preferably, the vacuum pump is provided with a vehicle-data-bus connector which is configured to provide a data communication with other motor vehicle units via a vehicle data bus system, e.g. via a motor vehicle CAN bus system. In this case, the difference-pressure parameter is typically received via the vehicle data bus system meaning that the pressure sensor connector is defined by the vehicle-data-bus connector. Alternatively, the vacuum pump can be provided with a separate pressure sensor connector for providing a direct electrical connection to the motor vehicle pressure sensor. The difference-pressure parameter can be periodically received via an analog difference-pressure signal whose present amplitude and/or frequency indicates the present difference-pressure parameter, or can be received via a digital signal periodically transmitting a digitally encoded difference-pressure parameter. Generally, the difference-pressure parameter can be received via any kind of signal allowing a periodical parameter transmission. In the present context, the difference-pressure parameter indicates a present difference pressure of the brake booster vacuum chamber relative to the present atmospheric pressure, wherein a greater (positive) difference-pressure parameter means a lower absolute vacuum chamber pressure and a lesser (positive) difference-pressure parameter means a higher absolute vacuum chamber pressure.

The motor vehicle vacuum pump according to the present invention is also provided with a pump control unit which is configured to control the electric motor based on the received present pressure signal. Preferably, the pump control unit is configured to provide a closed-loop control of the variable rotational motor speed, i.e. the pump control unit is configured to continuously adapt a motor drive power based on a motor-speed feedback signal to realize a desired set motor speed. Typically, the pump control unit is configured to switch on the electric motor if the received difference-pressure parameter is below a critical-pressure threshold, and is configured to switch off the electric motor if the difference-pressure parameter is equal to or greater than a target-pressure threshold.

According to the present invention, the pump control unit is provided with a permanent-operation-prevention control module which is configured to, preferably continuously, monitor the received difference-pressure parameter. In particular, the permanent-operation-prevention control module is configured to determine if the received difference-pressure parameter is inside or outside of a defined tolerance interval. The tolerance interval is defined by an upper tolerance interval limit and by a lower tolerance interval limit. The pump control unit is configured to activate the permanent-operation-prevention control module at least during a pumping operation. The permanent-operation-prevention control module is provided with or connected to a timing means to allow a time-dependent evaluation of the received difference-pressure parameter. According to the present invention, the permanent-operation-prevention control module is configured to switch off the electric motor if the received difference-pressure parameter remains within the tolerance interval for a defined threshold time span, meaning that the vacuum chamber difference pressure did not change significantly during the threshold time span.

The preferably constant tolerance interval width and the preferably constant threshold time span are defined in that way that the permanent-operation-prevention control module is able to reliably detect a non-changing difference pressure. For this purpose, the tolerance interval width is, in particular, provided larger than the magnitude of measuring-inaccuracy-caused and/or signal-noise-caused fluctuations of the difference-pressure parameter. Preferably, the interval width and the threshold time span are adapted for different motor vehicle models.

The permanent-operation-prevention control module according to the present invention is configured to shut off the electric motor of the vacuum pump if the difference pressure does not (significantly) change during pumping operation. The permanent-operation-prevention control module therefore reliably avoids a useless and energy-wasting pumping operation if the pump performance is not sufficient to reach the target-pressure threshold at which the electric motor is normally switched off by the pump control unit. In particular, the permanent-operation-prevention control module avoids a permanent pumping operation which can cause severe damage or even a failure of the vacuum pump. The permanent-operation-prevention control module according to the present invention therefore provides a reliable and efficient motor vehicle vacuum pump.

In a preferred embodiment of the present invention, a monitoring timer is provided which is configured to continuously count up a monitoring time value, wherein the permanent-operation-prevention control module is connected to the monitoring timer and is configured to reset the monitoring time value to zero each time when the last received difference-pressure parameter is outside of the defined tolerance interval. The permanent-operation-prevention control module is furthermore configured to switch off the electric motor if the monitoring time value reaches the defined threshold time span. The monitoring timer is active at least during pumping operation and continuously counts up the monitoring time value. Because the monitoring time value is reset to zero each time when the last received difference-pressure parameter is outside of the defined tolerance interval, the monitoring time value always indicates the elapsed time span since the difference-pressure parameter was out of the tolerance interval last time. The monitoring time value therefore always indicates the time span for which the received difference-pressure parameter has been continuously inside the tolerance band. This allows to determine if the difference-pressure parameter has remained within the tolerance band for the defined threshold time span without requiring a data memory for saving a history of received difference-pressure parameters. This provides a simple and reliable motor vehicle vacuum pump.

Preferably, the permanent-operation-prevention control module is configured to shift the tolerance interval based on the difference-pressure parameter, wherein the tolerance interval shift is triggered each time when the last received difference-pressure parameter is outside of the present tolerance pressure interval. Chronologically, the received difference-pressure parameter is first compared to the present tolerance interval and afterwards the tolerance interval shift is triggered in case that the received difference-pressure parameter was outside of the tolerance interval. In the present context, shifting the tolerance interval means changing the upper and lower interval limit without changing the interval width. In particular, the tolerance band is shifted in that way that the last received difference-pressure parameter is inside of the shifted tolerance interval. As a result, the tolerance interval automatically "follows" the difference-pressure parameter if the difference-pressure parameter increases during the evacuation process as desired. This allows a reliable detection of a non-changing difference-pressure parameter independent of the actual value of the difference-pressure parameter.

Preferably, the permanent-operation-prevention control module is configured to shift the tolerance pressure interval in that way that the last received difference-pressure parameter defines the middle of the shifted tolerance interval so that the pressure-parameter fluctuations do not cause repetitive shifting of the tolerance interval.

Modern motor vehicles are provided with a plurality of sensors systems which detect and monitor various vehicle parameters. Typically, all these motor vehicle sensor systems are connected to the vehicle data bus system of the motor vehicle. In a preferred embodiment of the present invention, a vehicle-data-bus connector is provided which is configured to allow a data communication via the vehicle data bus system, wherein the permanent-operation-prevention control module is configured to read out a vehicle parameter via the vehicle data bus system, and to detect a malfunction based on the vehicle parameter. The vehicle data bus system allows to read out vehicle parameters from various motor vehicle control units and/or motor vehicle sensor systems. Preferably, the read-out vehicle parameter is either an atmospheric pressure parameter directly indicating a present atmospheric pressure or an altitude parameter indicating a present altitude of the motor vehicle and, as result, indirectly indicating the present atmospheric pressure. Generally, the read-out vehicle parameter could be any parameter allowing to determine or to estimate the present atmospheric pressure.

The permanent-operation-prevention control module can be either configured to periodically read out the vehicle parameter or can be configured to read out the vehicle parameter only if the permanent-operation-prevention control module detects a non-changing difference-pressure parameter. In any case, the permanent-operation-prevention control module is configured to evaluate the read-out vehicle parameter if it detects a non-changing difference-pressure, i.e. if the pump performance is not sufficient to reach the target-pressure threshold. The permanent-operation-prevention control module is configured to determine/estimate the present atmospheric pressure based on the read-out vehicle parameter, and to evaluate whether the insufficient pump performance could be caused by a relatively low present atmospheric pressure or not. In the latter case, the insufficient pump performance is probably caused by a malfunction of the vacuum pump and/ or the brake booster vacuum system, e.g. by a leak or a worn-out pumping unit. The evaluation of the vehicle parameter in case of a non-changing difference-pressure parameter therefore provides a relatively simple possibility to detect a malfunction. The malfunction detection, in turn, provides a very reliable vacuum pump.

Preferably, the permanent-operation-prevention control module or another module/element of the pump control unit is configured to indicate the detected malfunction to an external vehicle control unit via the vehicle data bus system. Preferably, the pump control unit is configured to provide a pump status parameter/signal which indicates the detected malfunction. This allows to write a corresponding error message to a vehicle error memory and allows to indicate the malfunction to the vehicle driver, for example, by switching on a warning signal so that the vehicle driver can drive to vehicle repair shop for checking the vacuum pump and or vacuum system.

In a preferred embodiment of the present invention, the electric motor is an electronically commutated electric motor allowing to variably control a motor speed of the electric motor. Preferably, the pump control unit is configured to control the variable motor speed based on the received difference-pressure parameter during an evacuation process. This provides a very efficient vacuum pump.

An embodiment of the present invention is described with reference to the enclosed drawings, wherein
figure 1 shows a schematic illustration of a part of a motor vehicle braking system with a motor vehicle brake booster and with a motor vehicle vacuum pump according to the present invention,
figure 2 shows exemplary temporal progressions of a difference-pressure parameter and of a motor status during a normal evacuation cycle, and
figure 3 shows exemplary temporal progressions of the difference-pressure parameter, of tolerance interval limits, of a monitoring time value, and of the motor status in case of an insufficient pump performance of the motor vehicle vacuum pump of figure 1.

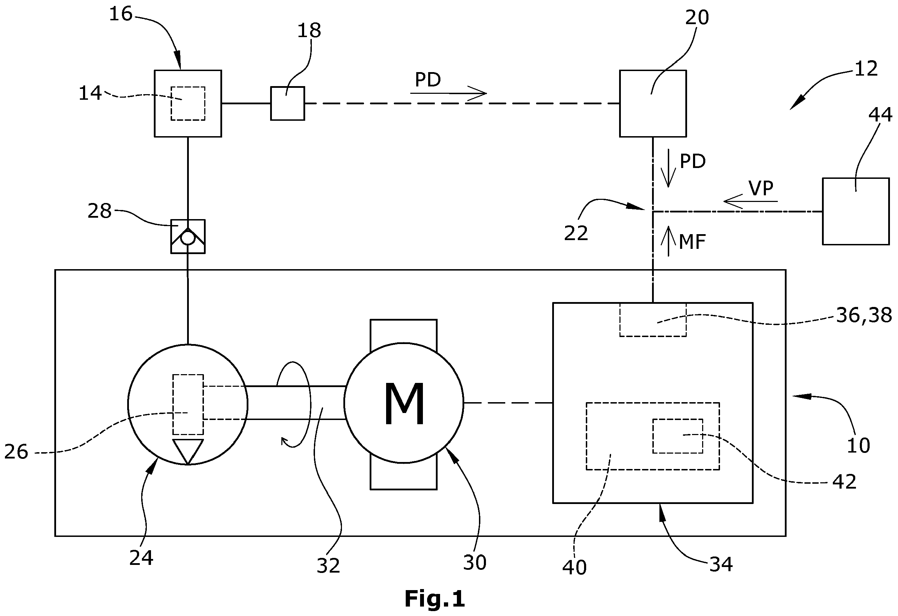

Fig. 1 shows a motor vehicle vacuum pump 10 which is used in a motor vehicle braking system 12 for providing a vacuum to a vacuum chamber 14 of a motor vehicle brake booster 16.

The motor vehicle braking system 12 also comprises a motor vehicle pressure sensor 18 which is fluidically connected to the vacuum chamber 14 and which is configured to measure a vacuum chamber difference pressure relative to atmospheric pressure. The motor vehicle pressure sensor 18 is furthermore configured to provide a difference-pressure parameter PD, which indicates the measured vacuum chamber difference pressure, to a motor vehicle control unit 20. The motor vehicle control unit 20 is connected to a vehicle data bus system 22 which is configured to allow a data communication between connected motor vehicle units.

The motor vehicle vacuum pump 10 comprises a pumping unit 24 with a rotatable pump rotor 26. In the present embodiment, the motor vehicle vacuum pump 10 is a rotary vane pump wherein the pump rotor 26 comprises a plurality of rotor vanes which are configured to be radially slidable and to rotate within a substantially cylindrical pumping chamber. The pumping unit 24 is fluidically connected to the vacuum chamber 14 of the motor vehicle brake booster 16 via a check valve 28. The pumping unit 24 is configured to evacuate the vacuum chamber 14.

The motor vehicle vacuum pump 10 also comprises an electric motor 30 which is configured to drive the pump rotor 26 via a rotor shaft 32 which is co-rotatably connected with the pump rotor 26. In the present embodiment, the electric motor 30 is an electronically commutated electric motor which can be operated with a variable rotational motor speed.

The motor vehicle vacuum pump 10 also comprises a pump control unit 34 which is configured to provide a closed-loop control of the variable rotational motor speed of the electric motor 30. The pump control unit 34 is connected to the vehicle data bus system 22 via a vehicle-data-bus connector 36 which is configured to allow a data communication via the vehicle data bus system 22.

In the present embodiment, the pump control unit 34 is configured to periodically read out the difference-pressure parameter PD from the motor vehicle control unit 20 via the vehicle data bus system 22. The vehicle-data-bus connector 36 thus defines a pressure sensor connector 38 which is configured to receive the difference-pressure parameter PD provided by the motor vehicle pressure sensor 18. In an alternative embodiment, the pump control unit 34 can be directly electrically connected to the motor vehicle pressure sensor 18 via a separate pressure sensor connector.

The pump control unit 34 is configured to control the electric motor 30 based on the difference-pressure parameter PD. The pump control unit 34 is in particular configured to switch on the electric motor 30 if the last received difference-pressure parameter PD is below a defined critical-pressure threshold PC, and is configured to switch off the electric motor 30 if the last received difference-pressure parameter PD is equal to or greater than a defined target-pressure threshold PT. In the present embodiment, the pump control unit 34 is also configured to actively control the rotational motor speed of the electric motor 30 if the electric motor 30 is switched on.

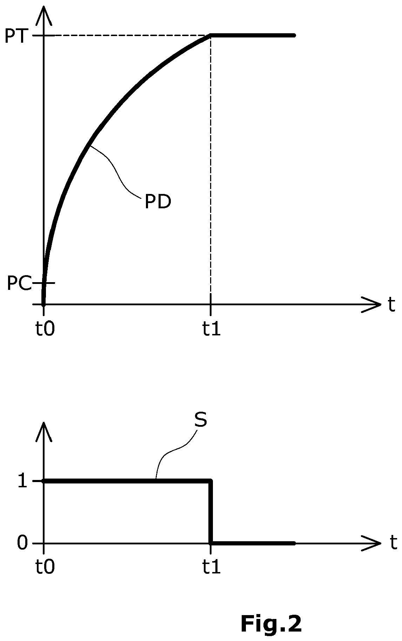

Fig. 2 shows the temporal progressions of the difference-pressure parameter PD (upper diagram) and of a status S of the electric motor 30 (lower diagram) during a normal evacuation cycle. The pump control unit 34 switches on (S = 1) the electric motor 30 at time point t0 because the difference-pressure parameter PD is below the critical-pressure threshold PC. The difference-pressure parameter PD thus starts to increase because the pumping unit 24 evacuates the vacuum chamber 14. The pump control unit 34 shuts off (S = 0) the electric motor 30 again if the pressure-parameter PD reaches the target-pressure threshold PT at time point t1.

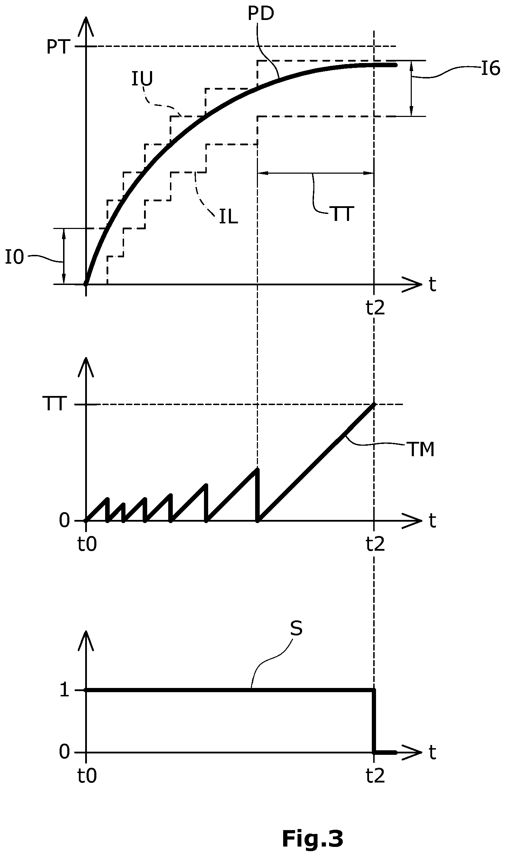

If the atmospheric pressure is relatively low, e.g. if the motor vehicle is driven at relatively high altitudes, or if the pumping efficiency of the pumping unit 24 is reduced, e.g. caused by wear of the rotor vanes, the pump performance of the pumping unit 24 can be insufficient to reach the target-pressure threshold PT. The temporal progression of the difference-pressure parameter PD and of the status of the electric motor 30 for this case is shown in Fig. 3.

The pump control unit 34 according to the present invention therefore comprises a permanent-operation-prevention control module 40 which is configured to avoid a permanent operation of the electric motor 30 in the case that the pumping unit 24 does not reach the target-pressure threshold PT.

The permanent-operation-prevention control module 40 is configured to continuously monitor the difference-pressure parameter PD if the electric motor 30 is switched on, and to compare the difference-pressure parameter PD with a defined present tolerance interval In (n = a natural number, in Fig. 3: n = 0 to 6) with a lower tolerance interval limit IL and an upper tolerance interval limit IU.

The permanent-operation-prevention control module 40 is configured to shift the tolerance interval In each time when the difference-pressure parameter PD reaches/exceeds one of the tolerance interval limits IL,IU. The permanent-operation-prevention control module 40 is in particular configured to shift the tolerance interval In in that way that the shift-triggering difference-pressure parameter PD defines the middle of the shifted tolerance interval In+1. The interval width of the tolerance interval In does not change if the tolerance interval In is shifted. The temporal progressions of the tolerance interval limits IL,IU is shown are the topmost diagram of Fig. 3.

The permanent-operation-prevention control module 40 comprises a monitoring timer 42 which is configured to count a monitoring time value TM. In the present embodiment, the monitoring timer 42 is configures to continuously count up the monitoring time value TM if the electric motor 30 is switched on. The permanent-operation-prevention control module 40 is configured to reset the monitoring time value TM to zero each time when the tolerance interval In is shifted, i.e. each time when the difference-pressure parameter PD reaches/exceeds one of the tolerance interval limits IL,IU. The monitoring time value TM therefore always indicates the elapsed time span for which the difference-pressure parameter PD is inside of the presently defined tolerance interval In. The temporal progression of the monitoring time value TM is shown in the middle diagram of Fig. 3.

The permanent-operation-prevention control module 40 is configured to switch off the electric motor 30 if the monitoring time value TM reaches a threshold time span TT (time point t2 in Fig. 3), i.e. if the difference-pressure parameter PD has remained inside of present tolerance interval In for the threshold time span TT.

The permanent-operation-prevention control module 40 therefore avoids a permanent operation of the electric motor 30 in the case that the difference-pressure parameter does not reach the target-pressure threshold PT during the evacuation cycle.

In the present embodiment, the permanent-operation-prevention control module 40 is configured to read out a vehicle parameter VP via the vehicle data bus system 22. In particular, the permanent-operation-prevention control module 40 is configured to read out the vehicle parameter VP each time when it shuts off the electric motor 30. Here, the vehicle parameter VP is an altitude parameter provided by a motor vehicle GPS system 44. In an alternative embodiment, the vehicle parameter VP could be an atmospheric pressure parameter provided by an atmospheric pressure sensor.

The permanent-operation-prevention control module 40 is configured to determine or estimate a present atmospheric pressure based on the vehicle parameter VP, and to evaluate if the present atmospheric pressure could be the reason for the insufficient pump performance of the pumping unit 24 or not. In particular, the permanent-operation-prevention control module 40 is configured to evaluate if the present atmospheric pressure is below a critical atmospheric pressure value or not, wherein the latter case indicates a malfunction of the pumping unit 24. The pump control unit 34 is configured to indicate the detected malfunction to the vehicle control unit 20 or to any other control unit of the motor vehicle by sending a malfunction signal MF via the vehicle data bus system 22.

### Reference List

- 10: motor vehicle vacuum pump
- 12: motor vehicle braking system
- 14: vacuum chamber
- 16: motor vehicle brake booster
- 18: motor vehicle pressure sensor
- 20: motor vehicle control unit
- 22: vehicle data bus system
- 24: pumping unit
- 26: pump rotor
- 28: check valve
- 30: electric motor
- 32: rotor shaft
- 34: pump control unit
- 36: vehicle-data-bus connector
- 38: pressure sensor connector
- 40: permanent-operation-prevention control module
- 42: monitoring timer
- 44: motor vehicle GPS system

- I0,I6: tolerance intervals
- IL: lower tolerance interval limit
- IU: upper tolerance interval limit
- MF: malfunction signal
- PC: critical-pressure threshold
- PD: difference-pressure parameter
- PT: target-pressure threshold
- TM: monitoring time value
- TT: threshold time span
- VP: vehicle parameter

## Claims

1. A motor vehicle vacuum pump (10), comprising
- a pumping unit (24) with a rotatable pump rotor (26),
- an electric motor (30) for driving the pump rotor (26),
- a pressure sensor connector (38) for periodically receiving a difference-pressure parameter (PD) provided by a motor vehicle pressure sensor (18), and
- a pump control unit (34) for controlling the electric motor (30) based on the difference-pressure parameter (PD),
**characterised in that**
the pump control unit (34) comprises a permanent-operation-prevention control module (40) which is configured to monitor the difference-pressure parameter (PD) and to switch off the electric motor (30) if the difference-pressure parameter (PD) remains within a defined tolerance interval (In) for a defined threshold time span (TT).

2. The motor vehicle vacuum pump (10) according to claim 1, wherein a monitoring timer (42) is provided which is configured to continuously count up a monitoring time value (TM), and wherein the permanent-operation-prevention control module (40) is connected to the monitoring timer (42) and is configured to reset the monitoring time value (TM) to zero each time when the difference-pressure parameter (PD) is outside of the defined tolerance interval (In), and to switch off the electric motor (30) if the monitoring time value (TM) reaches the defined threshold time span (TT).

3. The motor vehicle vacuum pump (10) according to one of the preceding claims, wherein the permanent-operation-prevention control module (40) is configured to shift the tolerance interval (In) based on the difference-pressure parameter (PD), and wherein the tolerance interval shift is triggered each time when the difference-pressure parameter (PD) is outside of the present tolerance pressure interval (In).

4. The motor vehicle vacuum pump (10) according to claim 3, wherein the permanent-operation-prevention control module (40) is configured to shift the tolerance pressure interval (In) in that way that the difference-pressure parameter (PD) at the triggering time defines the middle of the shifted tolerance interval (In+1).

5. The motor vehicle vacuum pump (10) according to one of the preceding claims, wherein a vehicle-data-bus connector (36) is provided for data communication via a vehicle data bus system (22), and wherein the permanent-operation-prevention control module (40) is configured to read out a vehicle parameter (VP) via the vehicle data bus system (22), and to detect a malfunction based on the vehicle parameter (VP).

6. The motor vehicle vacuum pump (10) according to claim 5, wherein the pump control unit (34) is configured to indicate the detected malfunction to an external vehicle control unit (20) via the vehicle data bus system (22).

7. The motor vehicle vacuum pump (10) according to one of the preceding claims, wherein the electric motor (30) is an electronically commutated electric motor.

## Patentansprüche

1. Kraftfahrzeugvakuumpumpe (10), umfassend
- eine Pumpeinheit (24) mit einem drehbaren Pumpenrotor (26),
- einen Elektromotor (30) zum Antreiben des Pumpenrotors (26),
- einen Drucksensoranschluss (38) zum periodischen Empfangen eines von einem Kraftfahrzeugdrucksensor (18) bereitgestellten Differenzdruckparameters (PD), und
- eine Pumpensteuereinheit (34) zum Steuern des Elektromotors (30) basierend auf dem Differenzdruckparameter (PD),
**dadurch gekennzeichnet, dass**
die Pumpensteuereinheit (34) ein Dauerbetriebverhinderungssteuermodul (40) umfasst, das eingerichtet ist, den Differenzdruckparameter (PD) zu überwachen und den Elektromotor (30) abzuschalten, wenn der Differenzdruckparameter (PD) für eine definierte Schwellenzeitspanne (TT) innerhalb eines definierten Toleranzintervalls (In) bleibt.

2. Kraftfahrzeugvakuumpumpe (10) nach Anspruch 1, wobei ein Überwachungstimer (42) vorhanden ist, der eingerichtet ist, einen Überwachungszeitwert (TM) kontinuierlich hochzuzählen, und wobei das Dauerbetriebverhinderungssteuermodul (40) mit dem Überwachungstimer (42) verbunden ist und eingerichtet ist, den Überwachungszeitwert (TM) jedes Mal auf Null zurückzusetzen, wenn der Differenzdruckparameter (PD) außerhalb des definierten Toleranzintervalls (In) liegt, und den Elektromotor (30) abzuschalten, wenn der Überwachungszeitwert (TM) die definierte Schwellenzeitspanne (TT) erreicht.

3. Kraftfahrzeugvakuumpumpe (10) nach einem der vorhergehenden Ansprüche, wobei das Dauerbetriebverhinderungssteuermodul (40) eingerichtet ist, das Toleranzintervall (In) basierend auf dem Differenzdruckparameter (PD) zu verschieben, und wobei die Toleranzintervallverschiebung jedes Mal ausgelöst wird, wenn der Differenzdruckparameter (PD) außerhalb des aktuellen Toleranzdruckintervalls (In) liegt.

4. Kraftfahrzeugvakuumpumpe (10) nach Anspruch 3, wobei das Dauerbetriebverhinderungssteuermodul (40) eingerichtet ist, das Toleranzdruckintervall (In) derart zu verschieben, dass der Differenzdruckparameter (PD) zum Auslösezeitpunkt die Mitte des verschobenen Toleranzintervalls (In+1) definiert.

5. Kraftfahrzeugvakuumpumpe (10) nach einem der vorhergehenden Ansprüche, wobei ein Fahrzeugdatenbusanschluss (36) zum Datenaustausch über ein Fahrzeugdatenbussystem (22) vorhanden ist, und wobei das Dauerbetriebverhinderungssteuermodul (40) eingerichtet ist, einen Fahrzeugparameter (VP) über das Fahrzeugdatenbussystem (22) auszulesen und basierend auf dem Fahrzeugparameter (VP) eine Fehlfunktion zu erkennen.

6. Kraftfahrzeugvakuumpumpe (10) nach Anspruch 5, wobei das Pumpensteuergerät (34) eingerichtet ist, die erkannte Fehlfunktion über das Fahrzeugdatenbussystem (22) an ein externes Fahrzeugsteuergerät (20) zu melden.

7. Kraftfahrzeugvakuumpumpe (10) nach einem der vorhergehenden Ansprüche, wobei der Elektromotor (30) ein elektronisch kommutierter Elektromotor ist.

## Revendications

1. Pompe à vide de véhicule moteur (10), qui comprend
- une unité de pompage (24) avec un rotor de pompe rotatif (26),
- un moteur électrique (30) pour entraîner le rotor de pompe (26),
- un connecteur de capteur de pression (38) pour recevoir périodiquement un paramètre de différence de pression (PD) fourni par un capteur de pression du véhicule moteur (18), et
- une unité de contrôle de pompe (34) pour contrôler le moteur électrique (30) sur la base du paramètre de différence de pression (PD),
**caractérisé en ce que**
l'unité de contrôle de la pompe (34) comprend un module de contrôle de prévention du fonctionnement permanent (40) qui est configuré pour surveiller le paramètre de différence de pression (PD) et pour désactiver le moteur électrique (30) si le paramètre de différence de pression (PD) reste dans un intervalle de tolérance défini (In) pendant un intervalle de temps de seuil défini (TT).

2. Pompe à vide de véhicule moteur (10) selon la revendication 1, dans laquelle une minuterie de surveillance (42) est fournie, qui est configurée pour compter en continu une valeur de temps de surveillance (TM), et dans laquelle le module de contrôle de prévention de fonctionnement permanent (40) est connecté à la minuterie de surveillance (42) et est configuré pour remettre à zéro la valeur de temps de surveillance (TM) à chaque fois que le paramètre de pression différentielle (PD) est en dehors de l'intervalle de tolérance défini (In), et pour désactiver le moteur électrique (30) si la valeur de temps de surveillance (TM) atteint l'intervalle de temps de seuil défini (TT).

3. Pompe à vide de véhicule moteur (10) selon l'une des revendications précédentes, dans laquelle le module de contrôle (40) de prévention du fonctionnement permanent est configuré pour décaler l'intervalle de tolérance (In) en fonction du paramètre de différence de pression (PD), et dans laquelle le décalage de l'intervalle de tolérance est déclenché à chaque fois que le paramètre de différence de pression (PD) est en dehors de l'intervalle de tolérance actuel.

4. Pompe à vide de véhicule moteur (10) selon la revendication 3, dans laquelle le module de contrôle (40) de prévention du fonctionnement permanent est configuré pour décaler l'intervalle de pression de tolérance (In) de manière à ce que le paramètre de pression de différence (PD) au moment du déclenchement définisse le milieu de l'intervalle de tolérance décalé (In+1).

5. Pompe à vide de véhicule moteur (10) selon l'une des revendications précédentes, dans laquelle un connecteur de bus de données de véhicule (36) est fourni pour la communication de données via un système de bus de données de véhicule (22), et dans laquelle le module de contrôle de prévention de fonctionnement permanent (40) est configuré pour lire un paramètre de véhicule (VP) via le système de bus de données de véhicule (22), et pour détecter un dysfonctionnement sur la base du paramètre de véhicule (VP).

6. Pompe à vide de véhicule moteur (10) selon la revendication 5, dans laquelle le module de contrôle de pompe (34) est configuré pour indiquer le dysfonctionnement détecté à une unité de contrôle de véhicule externe (20) via le système de bus de données de véhicule (22).

7. Pompe à vide de véhicule moteur (10) selon l'une des revendications précédentes, dans laquelle le moteur électrique (30) est un moteur électrique à commutation électronique.
